# EUROPÄISCHE PATENTSCHRIFT

(11) **EP 3 746 378 B1**
(45) Veröffentlichungstag und Bekanntmachung des Hinweises auf die Patenterteilung: **11.11.2026**
(21) Anmeldenummer: 19702874.9
(22) Anmeldetag: 31.01.2019
(51) Int. Cl.: B65G 9/00, B65G 19/02, B65G 19/24

(54) **STAUFÖRDERANLAGE**
ACCUMULATING CONVEYOR SYSTEM
SYSTÈME CONVOYEUR ACCUMULATEUR

(30) Priorität: 01.02.2018 DE 102018201541
(43) Veröffentlichungstag der Anmeldung: 09.12.2020
(73) Patentinhaber: Vanderlande Industries B.V., 5466 RB Veghel (NL)
(72) Erfinder: SCHNEUING, Ralf Ferdinand, 33649 Bielefeld (DE)
(74) Vertreter: Hoffmann Eitle
(86) Internationale Anmeldenummer: PCT/EP2019/052353
(87) Internationale Veröffentlichungsnummer: WO 2019/149807

(56) Entgegenhaltungen:
- EP-A1- 0 304 543
- EP-A1- 1 690 811
- EP-A2- 1 123 850
- DE-U1- 9 106 794
- DE-U1- 9 306 659
- US-A- 5 404 992
- US-B1- 6 554 127

## Beschreibung

### TECHNISCHES GEBIET

Die vorliegende Erfindung betrifft eine Förderanlage umfassend mehrere eine Förderkette zum Fördern von Hängeware bildende Förderelemente, wobei die Förderkette entlang einer Förderstrecke verläuft. Die Förderanlage umfasst ferner mehrere entlang einer Führung bewegliche und auf der Führung gelagerte Hängeelemente, wobei die Führung zumindest abschnittsweise parallel zur Förderstrecke verläuft. Weiter weisen die Hängeelemente einen Angriffsabschnitt auf, der dazu ausgebildet ist, jeweils eines der Förderelemente zu kontaktieren, um eine entlang der Führung gerichtete Antriebskraft des Förderelements aufzunehmen.

### STAND DER TECHNIK

Förderanlagen des obigen technischen Gebiets sind grundsätzlich aus dem Stand der Technik bekannt. Insbesondere aus der Offenlegungsschrift DE 40 17 821 A1 ist eine "Transportvorrichtung für eine Hängefördervorrichtung" bekannt, bei der eine endlose Förderkette aus Förderelementen mit Borsten versehen ist, die wie eine Rutschkupplung mit Hängeelementen zusammenwirken, um diese anzutreiben. Die Hängeelemente sind dort als Tragwagen ausgebildet, die über eine Laufschiene bewegt werden und jeweils einen Angriffsabschnitt aufweisen, über den die Borsten mit dem Tragwagen in Eingriff kommen, um diesen anzutreiben.

Grundsätzlich bietet die Ausgestaltung der Förderelemente mit Borsten den Vorteil, dass die Borsten steif genug sind, die Tragwagen mitzunehmen, im Falle eines Staus aber über die Angriffsabschnitte der Tragwagen hinwegrutschen und somit wie eine Rutschkupplung wirken.

Beim Aufstauen der im Stand der Technik als Tragwagen bezeichneten Hängeelemente wird jedoch eine erhebliche Kraft auf die Hängeelemente ausgeübt, wenn diese aufgestaut werden. Dies belastet den für das Aufstauen eingesetzten Stopper sowie die Borsten der Förderelemente und alle weiteren im Zusammenhang mit dem Antrieb der Hängeelemente eingesetzten Bauteile.

Aus dem Stand der Technik sind ferner DE 91 06 794 U1 und US 5 404 992 A bekannt. DE 91 06 794 U1 offenbart eine Hängefördereinrichtung mit einem Antrieb, der ein mit horizontal angeordneten Borsten besetztes Förderelement aufweist, das derart angeordnet ist, dass die Borsten mit einem seitlich pendelbar aufgehängten Fördermittel überlappen und damit in Eingriff bringbar sind. Ein Überlappungs-Längenbereich, die Elastizität der Borsten und die Masse des Fördermittels sind derart aufeinander abgestimmt, dass das Fördermittel durch die Schwerkraft in Richtung der Erstreckung der Borsten in Fördereingriff mit den Borsten gehalten ist. US 5 404 992 A offenbart ebenfalls eine Hängefördereinrichtung mit einem Hängeelement, das mittels eines aufblasbaren Schlauchs durch seitliches Wegkippen außer Eingriff mit einem Antriebsriemen gebracht und somit von der Förderkraft des Antriebsriemens entkoppelt werden kann, um leicht von Hand ergriffen werden zu können.

EP 1 690 811 A1 zeigt gemäß seiner Zusammenfassung ein Transportsystem für hängende Gegenstände, das eine Transportschiene aufweist, in der Halteelemente mittels eines Paares von Laufrollen verschiebbar geführt sind. Die Halteelemente werden von nach unten ragenden bolzenförmigen Mitnehmern der Antriebs-Kette mitgenommen. Damit die Halteelemente nicht unbeabsichtigt außer Eingriff mit den Mitnehmern kommen, sind zwischen der Transportschiene und den Halteelementen Mittel vorgesehen, die ein Außereingriffbringen von zwischen die Mitnehmer ragenden Ansätzen und den Mitnehmern bei einer vorgegebenen Maximalneigung des Halteelementes gegenüber der Transportschiene verhindern.

Die US 6 554 127 B1 zeigt eine Förderanlage mit den Merkmalen des Oberbegriffs des Anspruchs 1.

Eine Aufgabe der vorliegenden Erfindung liegt vor diesem Hintergrund darin, eine Förderanlage bereitzustellen, die ein schonenderes Aufstauen der Hängeelemente erlaubt und damit die Haltbarkeit und Zuverlässigkeit erhöht, ohne auf widerstandskräftigere Materialien angewiesen zu sein.

### DARSTELLUNG DER ERFINDUNG

Die obige Aufgabe wird erfindungsgemäß durch eine Förderanlage nach Anspruch 1 gelöst. Vorteilhafte Ausgestaltungen der Erfindung ergeben sich aus den jeweiligen Unteransprüchen.

Die erfindungsgemäße Förderanlage des obigen technischen Gebiets umfasst mehrere eine Förderkette zum Fördern von Hängewaren bildende Förderelemente, wobei die Förderkette entlang einer Förderstrecke verläuft, mehrere entlang einer Führung bewegliche und auf der Führung gelagerte Hängeelemente, wobei die Führung zumindest abschnittsweise parallel zur Förderstrecke verläuft, wobei die Hängeelemente einen Angriffsabschnitt aufweisen, der dazu ausgebildet ist, jeweils eines der Förderelemente zu kontaktieren, um eine entlang der Führung gerichtete Antriebskraft des Förderelements aufzunehmen. Diese Förderanlage ist erfindungsgemäß dadurch gekennzeichnet, dass zumindest eins der Förderelemente Borsten zum Kontaktieren des Angriffsabschnitts der Hängeelemente zum Aufbringen der Antriebskraft aufweist, wobei der Angriffsabschnitt der Hängeelemente zwischen einer Förderstellung und einer Staustellung kippbar ist, wobei der Angriffsabschnitt in der Förderstellung aufgerichtet ist, um die Antriebskraft aufzunehmen, und in der Staustellung weggekippt ist, um der Antriebskraft auszuweichen. Der Angriffsabschnitt drängt dabei in seine Förderstellung.

Dadurch, dass der Angriffsabschnitt der Hängeelemente zwischen der Förderstellung und der Staustellung kippbar ist, kann die von den Förderelementen ausgeübte Kraft im aufgerichteten Zustand des Angriffsabschnitts auf das Hängeelement übertragen werden, während es dem Angriffsabschnitt aber auch möglich ist, dieser Antriebskraft auszuweichen, indem er weggekippt.

Bei der vorliegenden Erfindung wird grundsätzlich das Prinzip der rutschkupplungsähnlichen Übertragung der Antriebskraft übernommen, wie es beispielsweise aus DE 40 17 821 A1 bekannt ist. Darüber hinaus ist das Hängeelement dazu ausgebildet, den Reibungswiderstand zwischen dem Hängeelement und dem Förderelement selektiv zu reduzieren und damit die Belastung des Gesamtsystems im aufgestauten Zustand der Hängeelemente zu begrenzen.

Indem der Angriffsabschnitt in seine Förderstellung drängt, ist sichergestellt, dass das Hängeelement nicht in seiner Staustellung verbleibt, in der er keine Antriebskraft des Förderelements aufnimmt. Dies kann durch verschiedene Mechanismen bewirkt werden. Insbesondere kann das Hängeelement so ausgebildet sein, dass es sich durch die Schwerkrafteinwirkung wie ein Stehaufmännchen stets aufrichtet.

Auf das Hängeelement wirkt einerseits die Antriebskraft des Förderelements, wenn und solange das Hängeelement in der Förderstellung steht. Außerdem wirkt auf das Hängeelement eine Reibungskraft der Führung, auf der das Hängeelement gelagert ist. Eine Aufrichtkraft, mit der der Angriffsabschnitt in seine Förderstellung drängt, wirkt der Antriebskraft des Förderelements entgegen.

Das Hängeelement ist in einer bevorzugten Ausführungsform so ausgestaltet, dass die Antriebskraft derart auf den Angriffsabschnitt und die Reibungskraft auf einen anderen Teil des Hängeelements, nämlich den Teil, über den das Hängeelement auf der Führung gelagert ist, wirkt, dass sich aus der Summe der Antriebskraft und der Reibungskraft ein erstes Drehmoment ergibt, welches darauf drängt, das Hängeelement aus der Förderstellung in die Staustellung zu kippen. Bevorzugt wird ein entgegengesetztes Aufrichtdrehmoment durch die Aufrichtkraft und die Reibung des Hängeelements gebildet, das die Förderung des Hängeelements dadurch ermöglicht, dass der Angriffsabschnitt nicht aus der Förderstellung in die Staustellung kippt.

Alternativ kann die Aufrichtkraft auch durch ein Federelement erzeugt werden.

Da der Angriffsabschnitt aus der Förderstellung in die Staustellung kippt, sobald die auf ihn einwirkende Antriebskraft die Aufrichtkraft übersteigt, kann durch die Größe der Aufrichtkraft die maximal überwindbare Reibungskraft festgelegt werden: Wenn die Reibung, beispielsweise durch einen Stopper oder ein ähnliches zum Aufstauen genutztes Element, die Aufrichtkraft übersteigt, kippt der Angriffsabschnitt in die Staustellung weg, bevor eine die Reibung übersteigende Antriebskraft auf das Hängeelement aufgebracht werden kann.

Zum Antreiben des Hängeelements muss eine Antriebskraft auf das Hängeelement ausgeübt werden, die größer als die entgegengesetzte Reibungskraft ist. Gleichzeitig darf die Antriebskraft nicht größer als die Aufrichtkraft des Angriffsabschnitts sein, damit der Angriffsabschnitt nicht aus der Förderstellung in die Staustellung kippt und somit nachgibt.

Sobald die Reibungskraft wieder unter die Aufrichtkraft fällt, kann die zum Überwinden dieser geringeren Reibungskraft erforderliche Antriebskraft auf das Hängeelement ausgeübt und dieses somit angetrieben werden. Bei geringer Reibung, wenn also die Aufrichtkraft die Reibungskraft übersteigt, kann eine die Reibung übersteigende Antriebskraft auf das Hängeelement aufgebracht werden, um es anzutreiben.

Durch die vorliegende Erfindung ist es also möglich, eine maximal auf das Hängeelement auszuübende Antriebskraft zu definieren, sodass die beim Aufstauen der Hängeelemente entstehende Belastung der mit dem Antrieb verbundenen Komponenten reduziert wird. Dies erhöht die Zuverlässigkeit und Haltbarkeit der Förderanlagen gegenüber dem Stand der Technik.

In einer bevorzugten Ausführungsform ist die Förderkette geschlossen. Die vorliegende Erfindung und insbesondere die Fähigkeit, der Antriebskraft auszuweichen und somit die Belastung auf die mit dem Antrieb verbundenen Komponenten zu reduzieren, hat besondere Vorteile in Zusammenhang mit einer endlosen Antriebsform durch eine geschlossene Förderkette. Alternativ kann die Förderkette jedoch auch geöffnet sein, also einen Anfang und ein Ende aufweisen.

Bevorzugt weisen mehrere Förderelemente, besonders bevorzugt alle Förderelemente, Borsten zum Kontaktieren des Angriffsabschnitts der Hängeelemente zum Aufbringen der Antriebskraft auf.

Derartige Borsten sind zwar grundsätzlich aus dem Stand der Technik bekannt und insbesondere auch im Dokument DE 40 17 821 A1 gezeigt, um eine Art Rutschkupplung, d. h. einen weitgehend flexiblen Kontakt zwischen einem Förderelement und einem Hängeelement oder Tragwagen oder dergleichen zu realisieren. Im Zusammenhang mit der vorliegenden Erfindung sind Borsten aber darüber hinaus auch deswegen besonders vorteilhaft, weil sie jederzeit ein spontanes Wiederaufgreifen der Antriebskraft zwischen dem Förderelement und dem Hängeelement ermöglichen. Wenn beispielsweise ein Stopper oder dergleichen zum Aufstauen der Hängeelemente gelöst wird, führt die Aufrichtkraft sofort dazu, dass die Angriffsabschnitte in ihre Förderstellung zurückkippen und sofort von den Borsten ergriffen werden, da diese eine quasi-kontinuierliche Kopplung der Förderelemente an die Hängeelemente bilden. Dies bedeutet, dass die Hängeelemente nicht jeweils erst auf ein herannahendes Förderelement warten müssen, sondern direkt zusammen mit dem Aufrichten die Antriebskraft aufnehmen können.

Auf diese Weise ermöglicht die erfindungsgemäße Förderanlage eine besonders schnelle Reaktionszeit auf die Steuerungsimpulse für einen Stopper oder dergleichen zum Aufstauen und Weiterfördern der Hängeelemente. Das Aufstauen und Weiterfördern der Hängeelemente kann somit besonders präzise verwirklicht und die Effizienz der Anlage damit maximiert werden.

Alternativ können auch Kammförderer oder andere Arten von Förderelementen eingesetzt werden, um mit dem Angriffsabschnitt der Hängeelemente zusammenzuwirken und die Antriebskraft auf das Hängeelement aufzubringen.

Die Führung weist Führung eine Schiene auf, die zum Aufnehmen einer Rolle oder mehrerer Rollen ausgebildet ist. Eine solche Schiene macht es besonders leicht, die Hängeelemente in der Führung so zu führen, dass sie einerseits entlang der Führung beweglich, andererseits in der Führung gelagert und zudem gegenüber der Führung oder anderen statischen Elementen kippbar sind. Alternativ kann die Führung jedoch auch beispielsweise als Kombination aus Kulissenführung und Lager ausgebildet sein, wobei die Kulissenführung nicht direkt zum Aufnehmen und Lagern der Rolle oder Rollen ausgebildet ist, sondern lediglich zum Führen.

Mit Vorteil sind die Hängeelemente zur Aufnahme eines Stücks der Hängeware, insbesondere als Taschen, ausgebildet. Solche (vorzugsweise taschenförmigen) Hängeelemente haben sich bewährt, wenn einzelne Teile durch die Förderanlagen gefördert werden sollen. Dies ist vor allem dann von Bedeutung, wenn die einzelnen Teile nicht die gleiche Form haben und insbesondere nicht ohne weiteres aufgehängt werden können.

Während also für Kleidungsstücke, die auf einem Bügel hängend transportiert werden können, auch Bügel oder ähnliche Elemente als Hängeelemente infrage kommen, können Pakete oder andere Liegewareteile nicht ohne Weiteres auf einem solchen Bügel transportiert werden und müssen daher auf einer Lagerfläche oder in einer Tasche oder einem ähnlichen Element aufgenommen werden. Alternativ zu einer Tasche oder einem ähnlichen Element zur Aufnahme eines Stücks der Hängeware kann das Hängeelement aber auch als Bügel ausgebildet sein, der sich insbesondere für die Förderung von Kleidungsstücken oder dergleichen eignet.

In einer bevorzugten Ausführungsform ist das Hängeelement derart ausgebildet, dass der Angriffsabschnitt durch die auf das Hängeelement wirkende Schwerkraft oder eine Federkraft in die Förderstellung drängt. Die Schwerkraft kann insbesondere dadurch genutzt werden, dass das Hängeelement einen Hebelmechanismus bildet, sodass die auf das Hängeelement, insbesondere die hieran hängende Ware wirkende Schwerkraft den Angriffsabschnitt aufrichtet, um in die Förderstellung zu gelangen. Neben der Schwerkraft kann vorzugsweise auch eine Federkraft genutzt werden. Diese wird auch deshalb bevorzugt weil sie keine zusätzliche Energiequelle erfordert, was die Förderanlage weniger komplex und aufwendig macht und praktisch zu Wartungsfreiheit in Zusammenhang mit dem Drängen des Angriffsabschnitts in die Förderstellung führt. Als Alternative zu Schwerkraft oder Federkraft können allerdings auch andere Kraftquellen zum Einsatz kommen, beispielsweise Aktoren, die den Angriffsabschnitt gezielt und gegebenenfalls computergesteuert in eine Förderstellung bringen können. Insbesondere im Fall von Aktoren ist es auch möglich, den Angriffsabschnitt anders als durch Kippen aus der Staustellung in die Förderstellung und andersherum zu überführen.

Bevorzugt weist die Förderanlagen einen Stopper zum Aufstauen der Hängeelemente entlang der Führung auf. Ein solcher Stopper ist für die Umsetzung einer Stauförderanlage von großer Bedeutung und ermöglicht eine gezielte Steuerung des Bewegungsablaufs der einzelnen Hängeelemente und der damit geförderten Teile. Der Stopper kann die Hängeelemente selektiv aufstauen, indem er das Fördern der Hängeelemente unterbricht, und ebenso das Weiterfördern freigeben. Der Stopper ist somit ein sehr wirksames Instrument für die Steuerung der Förderanlage und hat gerade im Zusammenhang mit der vorliegenden Erfindung erhebliche Vorteile.

Denn im Zusammenhang mit der vorliegenden Erfindung kann der Stopper seine Stärken noch besser ausspielen als bei Anlagen des Stands der Technik. Denn die ansonsten auf die Hängeelemente, Förderelemente und übrigen mit dem Antrieb verbundenen Teile der Förderanlagen wirkenden Reibungskräfte und anderen Belastungen, die beim Aufstauen, **d.h.** Unterbrechen der Förderung der Hängeelemente, entstehen, können durch die Erfindung erheblich reduziert werden. Dadurch kann der Stopper vielseitiger eingesetzt werden, ohne die Förderanlage grundlegend umgestalten, beispielsweise verstärken, zu müssen.

Alternativ kann auf einen solchen Stopper jedoch auch verzichtet werden, wenn die Förderanlage andere Elemente zum Steuern der Förderung der einzelnen Teile einsetzt. Hierfür bietet der Stand der Technik grundsätzlich auch Lösungen an, die dem Fachmann bekannt sind.

Ein als solches nicht beanspruchtes Hängeelement für eine Förderanlage, wie sie oben beschrieben wurde, weist eine Rolle oder mehrere Rollen auf, über die das Hängeelement auf einer Führung der Förderanlagen lagerbar ist. Das Hängeelement weist ferner einen Angriffsabschnitt auf, der dazu ausgebildet ist, ein Förderelement zu kontaktieren, um eine entlang der Führung gerichtete Antriebskraft aufzunehmen. Erfindungsgemäß ist der Angriffsabschnitt des Hängeelements zwischen einer Förderstellung und einer Staustellung kippbar, wobei der Angriffsabschnitt in der Förderstellung aufgerichtet ist, um die Antriebskraft aufzunehmen, und in der Staustellung weggekippt ist, um der Antriebskraft auszuweichen. Dabei drängt der Angriffsabschnitt in seine Förderstellung.

Ein derartiges Hängeelement eignet sich besonders gut für eine Förderanlage gemäß der vorliegenden Erfindung und erzielt somit die im Zusammenhang mit der Beschreibung der Förderanlage erwähnten Vorteile oder trägt hierzu zumindest bei.

In einem bevorzugtem Beispiel ist das Hängeelement zur Aufnahme einer Hängeware, insbesondere als Tasche, ausgebildet. Dies ermöglicht einen besonders flexiblen Einsatz des Hängeelements auch für Liegeware, weil die Voraussetzungen der zu fördernden Ware, die durch das Hängeelement gefordert werden, minimal sind. Alternativ kann das Hängeelement aber auch als Bügel ausgebildet sein.

Die vorliegende Erfindung eignet sich besonders zum Einsatz in einer Förderkette zum Fördern von Hängeware gemäß DE 10 2014 224 253 A1, deren diesbezügliche Offenbarung durch Bezugnahme hierin aufgenommen wird. Weitere Vorteile und bevorzugte Merkmale der Erfindung ergeben sich aus der Gesamtheit der Patentansprüche und der nachfolgenden Figurenbeschreibung.

### KURZE FIGURENBESCHREIBUNG

FIG. 1 zeigt eine bevorzugte Ausführungsform einer Förderanlage, bei der Hängeelemente gerade aufgestaut werden.
FIG. 2 zeigt eine bevorzugte Ausführungsform einer Förderanlage, bei der Hängeelemente nicht gestaut, sondern parallel zueinander gefördert werden.
FIG. 3 und 4 zeigen bevorzugte Hängeelemente für eine bevorzugte Förderanlage.

### WEGE ZUR AUSFÜHRUNG DER ERFINDUNG

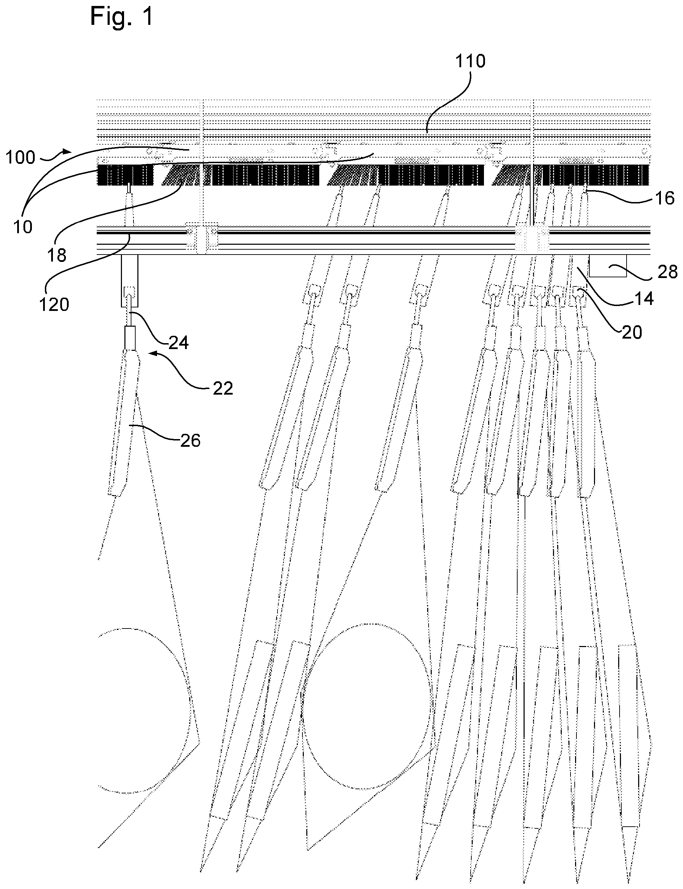

FIG. 1 zeigt eine bevorzugte Ausführungsform einer Förderanlage mit mehreren eine Förderkette 100 zum Fördern von Hängeware bildenden Förderelementen 10. Die Förderkette 100 kann insbesondere wie die in DE 10 2014 224 253 A1 beschriebene Förderkette ausgebildet sein.

Die Förderkette 100 verläuft entlang einer in Figur 1 angedeuteten Förderstrecke 110, die in der vorliegenden Ausführungsform als eine Schiene und Führung der Förderkette 100, d. h. der einzelnen Förderelemente 10 ausgebildet ist.

Die Förderstrecke 110 verläuft in der hier dargestellten Ausführungsform parallel zu einer Führung 120, entlang der mehrere Hängeelemente 14 beweglich sind und auf der diese Hängeelemente 14 auch gelagert sind.

Obwohl die Führung 120 in der Figur 1 vollständig parallel zur Förderstrecke 110 verläuft, muss dies nicht für jeden Abschnitt der Förderstrecke 110 bzw. Führung 120 gelten. Insbesondere der Abstand zwischen der Förderstrecke 110 und damit den Förderelementen 10 einerseits und der Führung 120 und damit den Hängeelementen 14 andererseits kann sich über den Verlauf der Förderstrecke 110 und der Führung 120 verändern. Eine Variation dieses Abstands führt dazu, dass sich der Eingriff, genauer das Maß des Eingriffs, zwischen den Förderelementen 10 und den Hängeelementen 14 verändert, was unter anderem auch Auswirkungen auf die Antriebskraft der Förderelemente 10 auf die Hängeelemente 14 hat.

Die Figur 1 zeigt für die Hängeelemente 14 jeweils einen Angriffsabschnitt 16, der dazu ausgebildet ist, jeweils eins der Förderelemente 10 zu kontaktieren, um eine entlang der Führung 120 gerichtete Antriebskraft des Förderelements 10 aufzunehmen. Dieser Angriffsabschnitt 16 wird in der vorliegenden Ausführungsform durch das am weitesten in Richtung der Förderelemente 10 vorstehende Ende des jeweiligen Hängeelements 14 gebildet.

Der Angriffsabschnitt 16 greift in der in Figur 1 gezeigten Ausführungsform in Borsten 18 der Förderelemente 10 ein, die für die Kraftübertragung zwischen den Förderelementen 10 und den Hängeelementen 14, **d.h.** für das Aufbringen der Antriebskraft, eingesetzt werden. Wenn sich also der Abstand zwischen der Führung 120 und der Förderstrecke 110 verändert, verändert sich auch das Maß, um das sich der Angriffsabschnitt 16 in die Borsten 18 erstreckt. Je tiefer die Angriffsabschnitte 16 der Hängeelemente 14 in die Borsten 18 eindringen, desto größer ist die durch die Borsten auf die Hängeelemente 14 aufbringbare Antriebskraft. Entlang der Förderstrecke 110 kann es vorkommen, dass die erforderliche Antriebskraft variiert, beispielsweise wenn die Hängeelemente eine abwechselnd aufwärts und abwärts gerichtete Strecke überwinden müssen. In einer solchen Situation könnte der Abstand zwischen der Förderstrecke 110 und der Führung 120 derart reduziert werden, dass der Eingriff des Angriffsabschnitts 16 mit den Borsten 18 ausreichend erhöht bzw. verringert wird.

Auf der Führung 120 befindet sich in der in Figur 1 gezeigten Ausführungsform ferner ein Stopper 28, der die Hängeelemente 14 aufstaut. In dieser Situation werden die Hängeelemente 14 von den Förderelementen 10 so weit auf der Führung 120 gefördert, bis sie mit dem Stopper 28 oder einem vorauslaufenden Hängeelement 14 in Kontakt kommen und dadurch gestoppt werden. Somit werden die Hängeelemente 14 am Stopper 28 aufgestaut.

Da die Kraftübertragung zwischen den Förderelementen 10 und den Hängeelementen 14 über die Borsten 18 einen Schlupf erlaubt und die Hängeelemente 14 erfindungsgemäß auch geeignet sind, der Antriebskraft durch die Förderelemente 10 durch Wegkippen auszuweichen, kann gleichzeitig ein Aufstauen der Hängeelemente 14 am Stopper 28 und ein Fördern der weiter stromauf gelegenen Hängeelemente 14 stattfinden, sodass die Hängeelemente auf diese Weise verdichtet, d.h. ihr Abstand auf der Führung 120 reduziert, werden können.

Die Hängeelemente 14 weisen an ihrer dem Angriffsabschnitt 16 bezüglich der Führung 120 gegenüberliegenden Seite eine Öse 20 auf, in die ein Haken 24 einer Tasche 22 oder eines Kleiderbügels eingreifen kann. Die Tasche 22 weist neben dem Haken 24 unter anderem auch noch einen Taschenkörper 26 auf, in dem die zu fördernden Waren eingebracht werden können. Die auf die Tasche 22 und gegebenenfalls auch ihren Inhalt ausgeübte Schwerkraft wirkt über die Öse 20 derart auf die Hängeelemente 14 ein, dass sich der Angriffsabschnitt 16 immer aufrichten will, d.h. in seine Förderstellung drängt. Im gestauten Zustand, also wenn der Stopper 28 geschlossen ist, wird die Reibung der Hängeelemente 14 sprunghaft erheblich erhöht, so dass die zur Überwindung dieser Reibung erforderliche Antriebskraft größer als die Aufrichtkraft ist. Die Antriebskraft der Förderelemente 10 auf die Hängeelemente 14 führt im gestauten Zustand, in dem die Aufrichtkraft geringer als die erforderliche Antriebskraft ist, dazu, dass die Hängeelemente 14 in der Förderrichtung wegkippen, um der Antriebskraft weitestgehend auszuweichen.

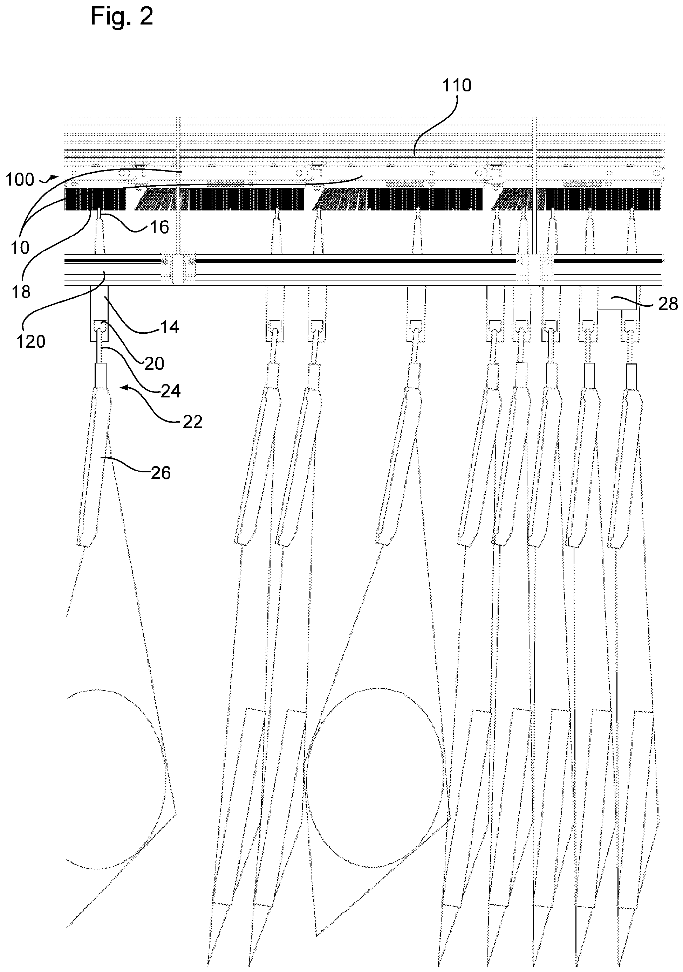

FIG. 2 zeigt dieselbe Ausführungsform wie FIG. 1, allerdings in einen Zustand, in dem der Stopper 28 geöffnet ist, nachdem die Hängeelemente 14 aufgestaut wurden. Im Vergleich zu FIG. 1 fällt auf, dass die einzelnen bereits aufgestauten Hängeelemente 14 im rechten Bildbereich wesentlich näher aneinander angeordnet sind als die noch aufzustauenden Hängeelemente im linken Bereich der FIG. 1.

Im Übrigen entsprechen, die in FIG. 1 gezeigten Elemente genau denjenigen aus FIG. 2, sodass auf eine wiederholte Beschreibung dieser Elemente verzichtet wird.

Durch die in FIG. 1 und 2 gezeigte Ausführungsform wird eine Förderanlage illustriert, die ein effizientes Aufstauen von Hängeelementen erlaubt, ohne die mit dem Antrieb der Hängeelemente verbundenen Komponenten stark zu belasten. Die Förderanlage kann gleichzeitig besonders effizient betrieben werden, weil die Hängeelemente unmittelbar nach Lösen des die Aufstauung bewirkenden Stoppers 28 weitergefördert werden können. Auf diese Weise kann die bevorzugte Förderanlage eine besonders hohe Förderdichte erzielen, was die Effizienz der gesamten Förderanlage spürbar erhöht.

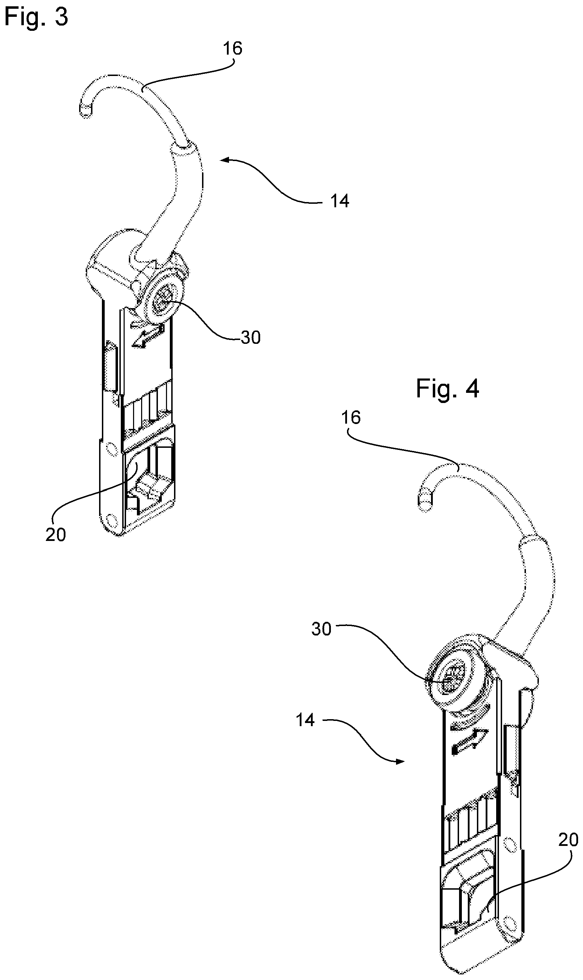

Figur 3 und Figur 4 zeigen bevorzugte Beispiele eines Hängeelements 14. Dieses Hängeelement weist einen Haken auf, dessen äußerer Abschnitt als Angriffsabschnitt 16 im Sinne der zuvor beschriebenen Förderanlage ausgebildet ist. Der Angriffsabschnitt ermöglicht es den Borsten 18 der Förderelemente 10, mit ihm in Eingriff zu gelangen und dadurch eine Antriebskraft aufzunehmen.

Das Hängeelement 14 weist eine Rolle 30 auf, die in dem vorliegenden Beispiel als Doppelrolle ausgebildet ist und durch die das Hängeelement 14 auf der Führung 120 gelagert ist. Die Rolle 30 rollt in der Führung 120, so dass auch schwere zu fördernde Gegenstände durch das Hängeelement 14 mit relativ geringem Kraftaufwand gefördert werden können. Die Rolle 30 weist eine Achse auf, um welche das Hängeelement 14 zwischen der Förderstellung und der Staustellung kippbar ist. Der Haken mit dem Angriffsabschnitt 16 einerseits und ein Körper mit der Öse 20 andererseits bewegen sich als Wippe aus einander gegenüberliegenden und sich in entgegengesetzten Richtungen erstreckende Hebel um die Rolle 30, um zwischen der Förderstellung und der Staustellung hin und her zu kippen.

## Patentansprüche

1. Förderanlage umfassend
mehrere eine Förderkette (100) zum Fördern von Hängeware bildende Förderelemente (10), wobei die Förderkette (100) entlang einer Förderstrecke (110) verläuft,
mehrere entlang einer Führung (120) bewegliche und auf der Führung (120) gelagerte Hängeelemente (14), wobei die Führung (120) zumindest abschnittsweise parallel zur Förderstrecke (110) verläuft, wobei die Führung (120) eine Schiene aufweist, die zum Aufnehmen einer Rolle (30) oder mehrerer Rollen (30) ausgebildet ist,
wobei die Hängeelemente (14) jeweils eine Rolle (30) oder mehrere Rollen (30) aufweisen, über welche die Hängeelemente (14) auf der Führung (120) gelagert sind, einen Angriffsabschnitt (16) aufweisen, der dazu ausgebildet ist, jeweils eines der Förderelemente (10) zu kontaktieren, um eine entlang der Führung (120) gerichtete Antriebskraft des Förderelements (10) aufzunehmen,
wobei der Angriffsabschnitt (16) der Hängeelemente (14) zwischen einer Förderstellung und einer Staustellung kippbar ist,
wobei der Angriffsabschnitt (16) in der Förderstellung aufgerichtet ist, um die Antriebskraft aufzunehmen, und in der Staustellung weggekippt ist, um der Antriebskraft auszuweichen, und
wobei der Angriffsabschnitt (16) in seine Förderstellung drängt,
**dadurch gekennzeichnet, dass**
zumindest eins der Förderelemente (10) Borsten (18) zum Kontaktieren des Angriffsabschnitts (16) der Hängeelemente (14) zum Aufbringen der Antriebskraft aufweist.

2. Förderanlage nach Anspruch 1, wobei die Förderkette (100) geschlossen ist.

3. Förderanlage nach einem der vorhergehenden Ansprüche, wobei mehrere, bevorzugt alle Förderelemente (10) Borsten (18) zum Kontaktieren des Angriffsabschnitts (16) der Hängeelemente (14) zum Aufbringen der Antriebskraft aufweisen.

4. Förderanlage nach einem der vorhergehenden Ansprüche, wobei die Führung (120) eine Schiene aufweist, die zum Aufnehmen einer Rolle oder mehrerer Rollen ausgebildet ist.

5. Förderanlage nach einem der vorhergehenden Ansprüche, wobei die Hängeelemente (14) zur Aufnahme eines Stücks der Hängeware, insbesondere als Taschen, ausgebildet sind.

6. Förderanlage nach einem der vorhergehenden Ansprüche, wobei das Hängeelement (14) derart ausgebildet ist, dass der Angriffsabschnitt (16) durch die auf das Hängeelement (14) wirkende Schwerkraft oder eine Federkraft in die Förderstellung drängt.

7. Förderanlage nach einem der vorhergehenden Ansprüche, die einen Stopper zum Aufstauen der Hängeelemente (14) entlang der Führung (120) aufweist.

## Claims

1. Conveyor system, comprising
a plurality of conveyor elements (10) forming a conveyor chain (100) for conveying suspended items, wherein the conveyor chain (100) extends along a conveyor line (110),
a plurality of suspension elements (14) that can move along a guide (120) and that are mounted on the guide (120), wherein the guide (120) extends at least in portions in parallel with the conveyor line (110), wherein the guide (120) comprises a rail which is designed to receive a roller (30) or a plurality of rollers (30),
wherein the suspension elements (14) each comprise one roller (30) or a plurality of rollers (30) via which the suspension elements (14) are mounted on the guide (120), one engagement portion (16) which is designed to contact one of the conveyor elements (10) in each case in order to take up a drive force of the conveyor element (10) directed along the guide (120),
wherein the engagement portion (16) of the suspension elements (14) can be tilted between a conveying position and a stowed position,
wherein the engagement portion (16), in the conveying position, is configured to take up the drive force and, in the stowed position, is tilted away in order to evade the drive force, and
wherein the engagement portion (16) is urged into its conveying position, **characterised in that** at least one of the conveyor elements (10) comprises bristles (18) for contacting the engagement portion (16) of the suspension elements (14) in order to apply the drive force.

2. Conveyor system according to claim 1, wherein the conveyor chain (100) is closed.

3. Conveyor system according to any of the preceding claims, wherein a plurality, preferably all of the conveyor elements (10) comprise bristles (18) for contacting the engagement portion (16) of the suspension elements (14) in order to apply the drive force.

4. Conveyor system according to any of the preceding claims, wherein the guide (120) comprises a rail which is designed to receive a roller or a plurality of rollers.

5. Conveyor system according to any of the preceding claims, wherein the suspension elements (14) are designed to hold one of the suspended items, in particular bags.

6. Conveyor system according to any of the preceding claims, wherein the suspension element (14) is designed in such a way that the engagement portion (16) is urged into the conveying position by the force of gravity acting on the suspension element (14) or by a spring force.

7. Conveyor system according to any of the preceding claims, which comprises a stopper for accumulating the suspension elements (14) along the guide (120).

## Revendications

1. Système convoyeur comprenant
plusieurs éléments de convoyage (10) formant une chaîne de convoyage (100) pour le convoyage de marchandises suspendues, dans lequel la chaîne de convoyage (100) s'étend le long d'un chemin de convoyage (110),
plusieurs éléments de suspension (14) mobiles le long d'un guide (120) et disposés sur le guide (120), dans lequel le guide (120) s'étend au moins par sections parallèlement au chemin de convoyage (110), dans lequel le guide (120) présente un rail qui est conçu pour recevoir un rouleau (30) ou plusieurs rouleaux (30),
dans lequel les éléments de suspension (14) présentent chacun un rouleau (30) ou plusieurs rouleaux (30), au moyen desquels les éléments de suspension (14) sont disposés sur le guide (120), présentent une section de prise (16) qui sert à entrer respectivement en contact avec un des éléments de convoyage (10) pour recevoir une force d'entraînement de l'élément de convoyage (10) dirigée le long du guide (120),
dans lequel la section de prise (16) des éléments de suspension (14) est basculable entre une position d'acheminement et une position d'accumulation,
dans lequel la section de prise (16) est relevée dans la position d'acheminement pour recevoir la force d'entraînement et est basculée dans la position d'accumulation pour échapper à la force d'entraînement, et
dans lequel la section de prise (16) pousse dans sa position d'acheminement,
**caractérisé en ce que**
au moins un des éléments de convoyage (10) présente des poils (18) pour contacter la section de prise (16) des éléments de suspension (14) pour appliquer la force d'entraînement.

2. Système convoyeur selon la revendication 1, dans lequel la chaîne de convoyage (100) est fermée.

3. Système convoyeur selon l'une quelconque des revendications précédentes, dans lequel plusieurs, préférablement tous les éléments de convoyage (10) présentent des poils (18) pour contacter la section de prise (16) des éléments de suspension (14) pour appliquer la force d'entraînement.

4. Système convoyeur selon l'une quelconque des revendications précédentes, dans lequel le guide (120) présente un rail qui est conçu pour recevoir un ou plusieurs rouleaux.

5. Système convoyeur selon l'une quelconque des revendications précédentes, dans lequel les éléments de suspension (14) sont conçus pour recevoir une pièce des marchandises suspendues, en particulier sous forme de poches.

6. Système convoyeur selon l'une quelconque des revendications précédentes, dans lequel l'élément de suspension (14) est conçu de manière à ce que la section de prise (16) soit poussée dans la position d'acheminement par la force de gravité ou une force de ressort agissant sur l'élément de suspension (14).

7. Système convoyeur selon l'une quelconque des revendications précédentes, qui présente une butée d'accumulation des éléments de suspension (14) le long du guide (120).
